# EUROPEAN PATENT APPLICATION

(11) **EP 4 389 337 A1**
(43) Date of publication of application: **26.06.2024**
(21) Application number: 22858144.3
(22) Date of filing: 14.06.2022
(51) Int. Cl.: B23K 11/11, B23K 31/00, G01N 3/00

(54) **DEFORMATION PREDICTING SYSTEM AND PROGRAM**

(30) Priority: 20.08.2021 JP 2021134795
(71) Applicant: OSAKA UNIVERSITY, Suita-shi Osaka 565-0871 (JP); Jsol Corporation, Tokyo 102-0074 (JP)
(72) Inventor: MA, Ninshu, Suita-shi, Osaka 565-0871 (JP); KUNUGI, Atsushi, Osaka-shi, Osaka 550-0001 (JP); KAWASHIMA, Toshikazu, Tokyo 104-6205 (JP); CHINO, Takeshi, Osaka-shi, Osaka 550-0001 (JP)
(74) Representative: Müller-Boré & Partner Patentanwälte PartG mbB
(86) International application number: PCT/JP2022/023775
(87) International publication number: WO 2023/021820

(57) **Abstract**

A deformation prediction system that calculates, with FEM analysis, a welding deformation of a structure (130) manufactured by performing spot welding according to the present invention includes a structure data capturing process (S 1), a welding point extraction process (S2), an FEM analysis model generation process (S3), a nugget element setting process (S4) of generating a nugget element (340) as an FEM analysis model of a spot welding point (140) at a position of the spot welding point (140), and setting, in the nugget element (340), an inherent deformation caused by resistance heating at the spot welding point (140) and pressurization at the spot welding point (140) during the spot welding, and a welding deformation calculation process (S5).

## Description

### TECHNICAL FIELD

The present invention relates to a deformation prediction system and a program.

### BACKGROUND ART

It is important to predict in advance how a structure is deformed as a whole due to heat during welding in a case where the structure is manufactured by welding a plurality of members. This prediction has been attempted by using a computer. A method for predicting the welding deformation of the structure using a computer includes a known method for predicting the welding deformation of the entire structure with FEM analysis using inherent deformation data for each welding line of the structure.

As for the inherent deformation data used for predicting the welding deformation of a structure with FEM analysis, the Japan Welding Engineering Society discloses, for example, an inherent deformation database storing inherent deformation data in accordance with a welding type of a welding joint, material physical properties of a member to be welded, and the like.

The existing inherent deformation data stored in the inherent deformation database is for a specific condition. For example, Patent Document 1 discloses that inherent deformation data of a welding line made of a material different from the welding line stored in the existing inherent deformation data is calculated using the existing inherent deformation database, and a welding deformation of an entire structure is predicted by FEM analysis using the inherent deformation data.

### PRIOR ART DOCUMENT

### PATENT DOCUMENT

Patent Document 1: JP 2012-117927 A

On the other hand, the method disclosed in Patent Document 1 is assumed to be applied to, for example, arc welding with which a welding line is formed by a welding torch, and cannot be applied to, for example, spot welding with which a spot welding point is formed by a spot welding gun.

Here, an example of the spot welding for forming a spot welding point using a spot welding gun will be described.

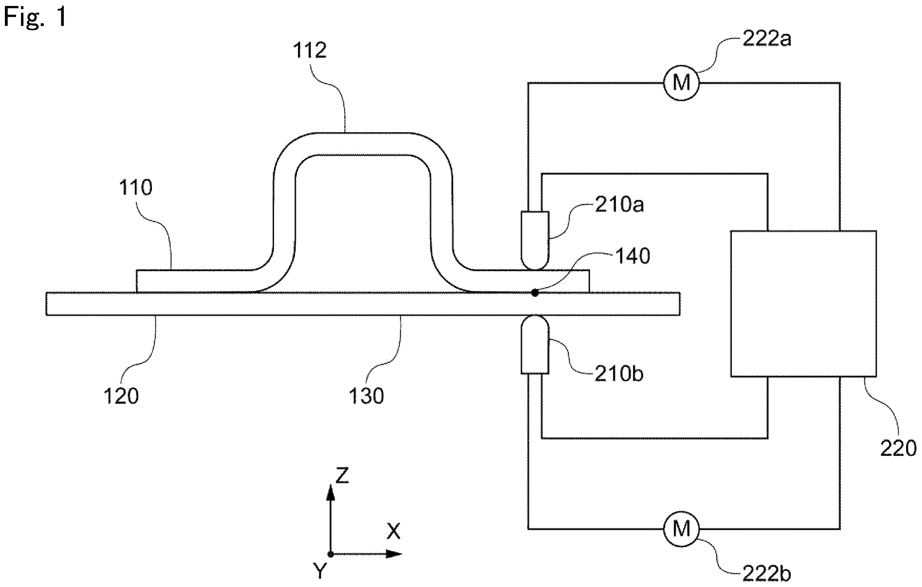

Fig. 1 is a schematic diagram explaining spot welding performed to manufacture a structure. In the following description, a horizontal direction in Fig. 1 is referred to as an X direction, a vertical direction is referred to as a Z direction, and a direction orthogonal to the X direction and the Z direction (a front-rear direction of a paper surface) is referred to as a Y direction. Further, an in-plane direction indicates a direction along a plane of a member, that is, any direction on an XY plane. Further, an out-of-plane direction indicates a direction orthogonal to the plane of the member, that is, the Z direction.

As illustrated in Fig. 1, a first member 110 and a second member 120, which are plate-shaped members respectively extending to the left and right sides in the X direction, are disposed to overlap with each other in the Z direction. The first member 110 has a protrusion 112 protruding upward in the Z direction at an approximately center in the X direction.

On the right side in the X direction with respect to the protrusion 112, a first spot welding gun 210a and a second spot welding gun 210b are disposed to sandwich the first member 110 and the second member 120 from above and below in the Z direction. The first spot welding gun 210a and the second spot welding gun 210b each have an approximately cylindrical shape, and are electrically connected to a controller 220 disposed outside so that current-carrying outputs of are controlled. A first motor 222a that moves the first spot welding gun 210a along the Z direction is disposed between the first spot welding gun 210a and the controller 220. A second motor 222b that moves the second spot welding gun 210b along the Z direction is disposed between the second spot welding gun 210b and the controller 220.

The controller 220 is configured to, when spot welding is performed, carry a current from the first spot welding gun 210a toward the second spot welding gun 210b via the first member 110 and second member 120, and drive the first motor 222a and the second motor 222b to move the first spot welding gun 210a downward in the Z direction and the second spot welding gun 210b upward in the Z direction. Therefore, the first member 110 and the second member 120 are melted by resistance heating generated by current carrying between the first spot welding gun 210a and the second spot welding gun 210b, and are pressurized along the Z direction by the movements of the first spot welding gun 210a and the second spot welding gun 210b. As a result, the first member 110 and the second member 120 are spot-welded, and a structure 130 is manufactured.

The spot welding described above forms a spot welding point 140 between the first member 110 and the second member 120. At the spot welding point 140, the first member 110 and the second member 120 are joined to each other at a position sandwiched by the first spot welding gun 210a and the second spot welding gun 210b.

As described above, the spot welding is performed by resistance heating generation by current carrying between the plurality of spot welding guns and pressurization generated by the plurality of spot welding guns. Therefore, when the welding deformation of the spot welding is predicted, it is necessary to consider the resistance heating and pressurization described above.

Conventionally, when the welding deformation of the spot welding is predicted, structure interaction analysis is performed in consideration of the resistance heating and pressurization described above. On the other hand, this structure interaction analysis is very complicated because it is necessary to generate an analysis model of the plurality of members and the plurality of spot welding guns. In addition, an enormous calculation time is required to calculate a prediction result of the welding deformation of the spot welding.

As another method for predicting the welding deformation of the spot welding, heat contraction analysis or structure analysis is conceivable. On the other hand, the heat contraction analysis is difficult to calculate a prediction result of the welding deformation of the spot welding in consideration of the pressurization by the plurality of spot welding guns. Further, the structure analysis is difficult to calculate a prediction result of the welding deformation of the spot welding in consideration of the resistance heating generated by the current carrying between the plurality of spot welding guns. The heat contraction analysis in consideration of pressurization or the structure analysis in consideration of resistance heating is very complicated as in the structure interaction analysis described above, because creation of an analysis model for the plurality of members and spot welding guns is necessary.

### SUMMARY OF THE INVENTION

### PROBLEMS TO BE SOLVED BY THE INVENTION

Therefore, an object of the present invention is to provide a deformation prediction system and a program able to calculate a prediction result of a welding deformation at high speed in consideration of resistance heating and pressurization in the spot welding.

### SOLUTIONS TO THE PROBLEMS

In order to solve this object, the present invention is characterized by having the following configurations.

First, a first aspect of the invention of the present application provides a deformation prediction system that calculates, with FEM analysis, a welding deformation of a structure manufactured by performing spot welding on a plurality of members, the deformation prediction system including; a structure data capturing process of capturing shape data of the structure; a welding point extraction process of extracting a position of the spot welding point from the shape data of the structure; an FEM analysis model generation process of generating an FEM analysis model of the structure based on the shape data of the structure; a nugget element setting process of generating a nugget element as an FEM analysis model of the spot welding point at the position of the spot welding point, and setting, in the nugget element, an inherent deformation caused by resistance heating at the spot welding point and pressurization at the spot welding point during the spot welding; and a welding deformation calculation process of calculating a welding deformation of the structure with the FEM analysis based on the FEM analysis model of the structure and the nugget element.

Further, a second aspect of the invention provides the invention from the first aspect, in which the inherent deformation includes an in-plane deformation mode including an in-plane inherent deformation at a time when the structure is deformed in an in-plane direction, an out-of-plane contraction mode including an out-of-plane contraction inherent deformation at a time when the structure contracts in an out-of-plane direction due to the pressurization at the spot welding point during the spot welding, and an out-of-plane bending mode including an out-of-plane bending inherent deformation at a time when the structure is bent in the out-of-plane direction by the resistance heating at the spot welding point during the spot welding.

Further, a third aspect of the invention provides the invention from the first or second aspect, in which the nugget element is formed in a radial shape around the position of the spot welding point.

Further, a fourth aspect of the invention provides the invention from the third aspect, in which the nugget element is formed in an octagonal shape around the position of the spot welding point.

Further, a fifth aspect of the invention provides the invention from any one of the first to fourth aspects, in which the deformation prediction system further includes an inherent deformation data preparation process of storing inherent deformation data corresponding to the spot welding point of the structure in an inherent deformation database, in which in the nugget element setting process, the inherent deformation caused by the resistance heating and the pressurization is set in the nugget element based on the inherent deformation data stored in the inherent deformation database.

Furthermore, a sixth aspect of the invention provides a deformation prediction program that calculates, with FEM analysis, a welding deformation of a structure manufactured by performing spot welding on a plurality of members, the deformation prediction program including: a structure data capturing process of capturing shape data of the structure; a welding point extraction process of extracting a position of the spot welding point from the shape data of the structure; an FEM analysis model generation process of generating an FEM analysis model of the structure based on the shape data of the structure; a nugget element setting process of generating a nugget element as an FEM analysis model of the spot welding point at the position of the spot welding point, and setting, in the nugget element, an inherent deformation caused by resistance heating at the spot welding point and pressurization at the spot welding point during the spot welding; and a welding deformation calculation process of calculating the welding deformation of the structure with the FEM analysis based on the FEM analysis model of the structure and the nugget element.

### EFFECTS OF THE INVENTION

With the above configuration, according to the invention from each aspect of the present application, the following effects can be obtained.

First, according to the first aspect of the invention of the present application, the deformation prediction system includes the nugget element setting process of generating the nugget element as the FEM analysis model of the spot welding point at the position of the spot welding point, and setting, in the nugget element, the inherent deformation caused by the resistance heating at the spot welding point and the pressurization at the spot welding point during the spot welding. The FEM analysis is performed based on the nugget element and the FEM analysis model of the structure manufactured by spot-welding a plurality of members. Therefore, it is possible to provide the deformation prediction system capable of calculating a prediction result of the welding deformation at high speed in consideration of the resistance heating and the pressurization in the spot welding.

Further, according to the second aspect of the invention, the inherent deformation includes the in-plane deformation mode including the in-plane inherent deformation at a time when the structure is deformed in the in-plane direction, the out-of-plane contraction mode including the out-of-plane contraction inherent deformation at the time when the structure contracts in the out-of-plane direction due to the pressurization at the spot welding point during the spot welding, and the out-of-plane bending mode including the out-of-plane bending inherent deformation at the time when the structure is bent in the out-of-plane direction by the resistance heating at the spot welding point during the spot welding. Therefore, a more accurate prediction result of the welding deformation can be calculated by setting, in the nugget element, the in-plane inherent deformation, the out-of-plane contraction inherent deformation, and the out-of-plane bending inherent deformation caused at the spot welding point by the resistance heating and pressurization in the spot welding.

Further, according to the third aspect of the invention, the nugget element is formed in a radial shape around the position of the spot welding point. Since the spot welding gun generally has an approximately cylindrical shape, an actual welding influence region at the spot welding point is approximately circular. Thus, a more accurate prediction result of the welding deformation can be calculated by generating the nugget element in a radial shape close to an approximately circular shape.

Further, according to the fourth aspect of the invention, the nugget element is formed in an octagonal shape around the position of the spot welding point. Since the spot welding gun generally has an approximately cylindrical shape, an actual welding influence region at the spot welding point is approximately circular. Therefore, a more accurate prediction result of the welding deformation can be calculated at high speed by generating the nugget element in an octagonal shape close to an approximately circular shape.

Further, according to the fifth aspect of the invention, the deformation prediction system includes the inherent deformation data preparation process of storing the inherent deformation data corresponding to the spot welding point of the structure in the inherent deformation database. In the nugget element setting process, the inherent deformation caused by the resistive heating and the pressurization is set in the nugget element based on the inherent deformation data stored in the inherent deformation database. Therefore, a more accurate prediction result of the welding deformation can be calculated by setting the inherent deformation in the nugget element based on various inherent deformation data stored in the inherent deformation database.

Further, according to the sixth aspect of the invention, the deformation prediction program includes the nugget element setting process of generating the nugget element as the FEM analysis model of the spot welding point at the position of the spot welding point, and setting, in the nugget element, the inherent deformation caused by the resistance heating at the spot welding point and the pressurization at the spot welding point during the spot welding. The FEM analysis is performed based on the nugget element and the FEM analysis model of the structure manufactured by spot-welding a plurality of members. Therefore, it is possible to provide the deformation prediction program capable of calculating the prediction result of the welding deformation at high speed in consideration of the resistance heating and the pressurization in the spot welding.

### BRIEF DESCRIPTION OF THE DRAWINGS

Fig. 1 is a schematic diagram explaining spot welding performed to manufacture a structure.
Fig. 2 illustrates an entire configuration of a deformation prediction system according to an embodiment of the present invention.
Fig. 3 illustrates a configuration of a storage device in Fig. 2.
Fig. 4 schematically illustrates an inherent deformation during the spot welding in Fig. 1.
Fig. 5 is a flowchart showing the inherent deformation prediction system in Fig. 2.
Fig. 6 illustrates an input screen of a structure data capturing process in Fig. 5.
Fig. 7 illustrates another input screen of the structure data capturing process in Fig. 5.
Fig. 8 is a plan view of the structure in Fig. 1.
Fig. 9 illustrates an FEM analysis model of the structure in Fig. 1.
Fig. 10 is a flowchart showing a nugget element setting process in Fig. 5.
Fig. 11 is a view where a nugget element is added to the FEM analysis model in Fig. 9.

### DESCRIPTION OF EMBODIMENTS

An embodiment of the present invention will be described below with reference to the accompanying drawings.

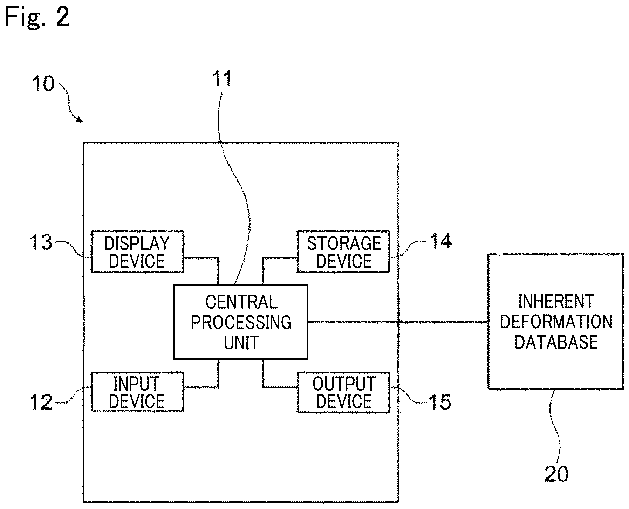

Fig. 2 illustrates an entire configuration of a deformation prediction system according to the embodiment of the present invention. As illustrated in Fig. 2, the deformation prediction system according to the embodiment of the present invention is mainly configured with a computer 10 that is connected to an inherent deformation database 20 for storing inherent deformation data. The computer 10 includes a central processing unit 11, an input device 12 such as a keyboard, a display device 13 such as a display, a storage device 14 such as a memory, and an output device 15 such as a printer. The input device 12 is for inputting inherent deformation data, data necessary for calculation of a welding deformation, and the like. The display device 13 displays the inherent deformation data, a calculation result of the welding deformation, and the like. The storage device 14 stores the inherent deformation data, a program for calculating the welding deformation, and the like. The output device 15 outputs the inherent deformation data, the calculation result of the welding deformation, and the like.

The central processing unit 11 controls the input device 12, the display device 13, and the output device 15, and is configured to be accessible to the storage device 14 and the inherent deformation database 20. The central processing unit 11, for example, receives inherent deformation data from an external system via the input device 12, stores the inherent deformation data in the inherent deformation database 20, and calculates a welding deformation using information input via the input device 12 and the program or data stored in the storage device 14.

In the inherent deformation database 20, a record including a set of a welding type, a material physical property, and a welding condition as welding condition information, and the inherent deformation data obtained based on these pieces of condition information is registered in advance.

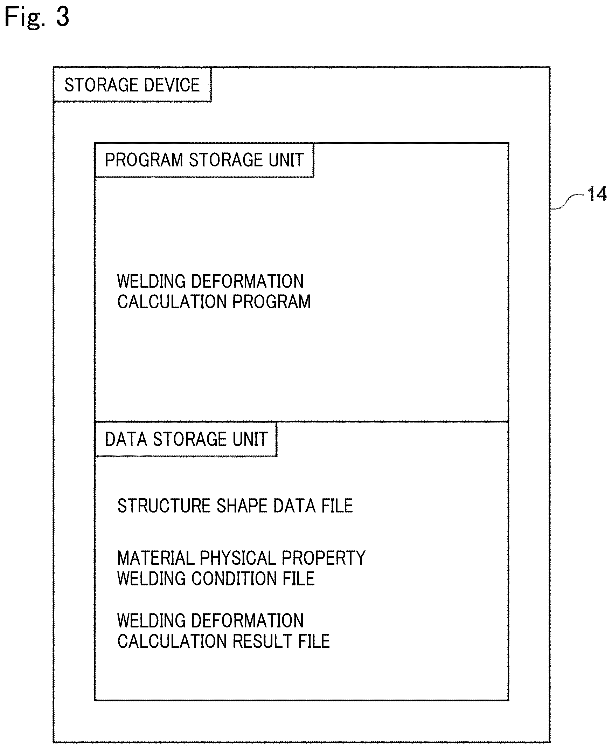

Fig. 3 illustrates a configuration of the storage device 14 in Fig. 2. As illustrated in Fig. 3, the storage device 14 includes a program storage unit and a data storage unit. The program storage unit stores a welding deformation calculation program for calculating a welding deformation of a structure formed by welding a first member and a second member with finite element analysis.

The welding deformation calculation program includes an analysis model generation program for generating an analysis model by dividing figure data of a member to be spot-welded into finite elements, and an FEM analysis program for calculating a welding deformation with elastic FEM analysis by applying the inherent deformation data to the analysis model.

On the other hand, the data storage unit includes a structure shape data file, a material physical property welding condition file, and a welding deformation calculation result file. Figure data of a structure formed by welding a first member and a second member is recorded in the structure shape data file. Material physical properties and welding conditions of members to be welded to each other are recorded in the material physical property welding condition file for each spot welding point in the structure. A calculation result of a welding deformation of the structure is recorded in the welding deformation calculation result file.

Next, the inherent deformation data stored in the inherent deformation database 20 will be specifically described.

As described above, in the inherent deformation database 20, an existing record received from an external system via the input device 12 is registered in advance. The existing record includes a set of condition information and inherent deformation data for welding the same type of materials or different types of materials.

As described above, since a first spot welding gun 210a and a second spot welding gun 210b each have an approximately cylindrical shape, a welding influence region at a spot welding point 140 also has an approximately cylindrical shape. A dot-shaped welded joint portion is obtained by resistance heating inside the welding influence region, and this joint portion is referred to as a nugget.

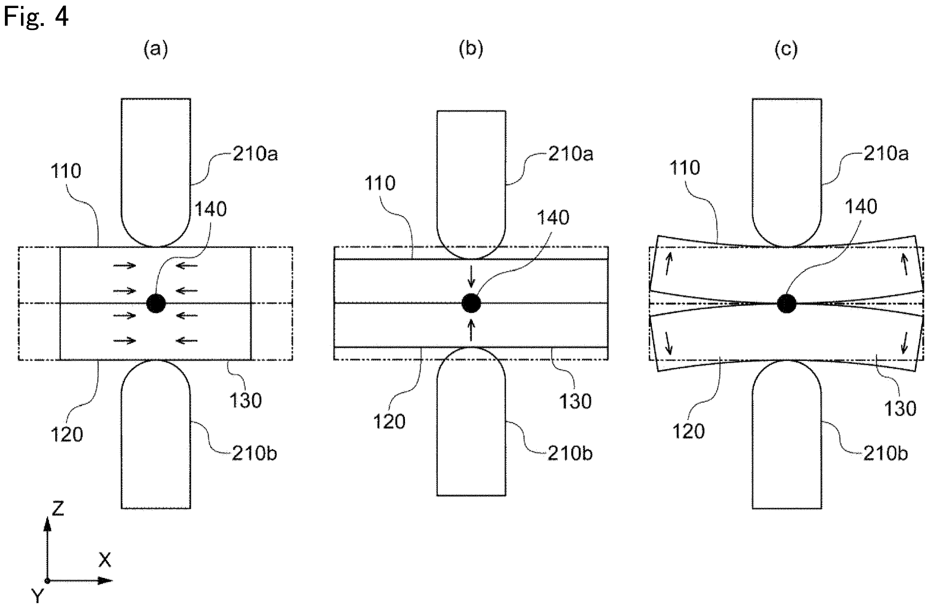

Fig. 4 schematically illustrates an inherent deformation during the spot welding in Fig. 1. In particular, Fig. 4 illustrates, in the spot welding performed on the first member 110 and the second member 120 illustrated in Fig. 1, a portion having a diameter of the nugget on which the spot welding is performed is partially taken out in an X direction of an inherent deformed distortion region.

Fig. 4(a) illustrates an in-plane deformation mode including an in-plane inherent deformation at a time a structure 130 is deformed in an in-plane direction. In the example illustrated in Fig. 4(a), the in-plane deformation mode includes an in-plane contraction mode in which the structure 130 is thermally contracted in the in-plane direction by cooling the structure 130 after the spot welding is performed. In the in-plane deformation mode, an in-plane inherent deformation indicated by an arrow occurs along thermal contraction inside the structure 130. This in-plane inherent deformation occurs so that contraction occurs in the in-plane direction from the spot welding point 140.

Fig. 4(b) illustrates an out-of-plane contraction mode in which the structure 130 contracts in an out-of-plane direction due to pressurization at the spot welding point 140 applied by the first spot welding gun 210a and the second spot welding gun 210b when spot welding is performed. In the out-of-plane deformation mode, an out-of-plane inherent deformation indicated by an arrow occurs along contraction inside the structure 130. This out-of-plane inherent deformation occurs so that contraction occurs in the out-of-plane direction from the spot welding point 140.

Fig. 4(c) illustrates an out-of-plane bending mode in which the structure 130 is bent so that the plane faces each other vertically in the Z direction in the out-of-plane direction due to resistance heating at the spot welding point 140 when the spot welding is performed. In the out-of-plane deformation mode, an out-of-plane inherent deformation indicated by an arrow occurs along bending inside the structure 130. This out-of-plane bending inherent deformation occurs so that the plane faces each other vertically in the Z direction in the out-of-plane direction.

In the present embodiment, the inherent deformation data includes three types of modes including the in-plane deformation mode, the out-of-plane contraction mode, and the out-of-plane bending mode illustrated respectively in Figs. 4(a) to 4(c). Therefore, the inherent deformation data includes the in-plane inherent deformation, the out-of-plane contraction inherent deformation, and the out-of-plane bending inherent deformation caused respectively in the in-plane deformation mode, the out-of-plane contraction mode, and the out-of-plane bending mode. The inherent deformation data is registered in the inherent deformation database 20 as an existing record in combination with condition information about welding of the same type of materials or welding of different types of materials.

In the present embodiment, the in-plane inherent deformation, the out-of-plane contraction inherent deformation, and the out-of-plane bending inherent deformation are provided as inherent stresses. The inherent stresses are calculated based on a displacement-distortion relational expression and a stress-distortion relational expression.

In the present embodiment, the inherent deformations such as the in-plane inherent deformation, the out-of-plane contraction inherent deformation, and the out-of-plane bending inherent deformation are provided as the inherent stresses, but may be provided as the inherent distortions. Alternatively, the inherent deformations described above may be provided as loads calculated by integrating the inherent stresses near the spot welding point 140.

Next, an operation for predicting a welding deformation of the structure formed by welding the first member and the second member with FEM analysis will be specifically described.

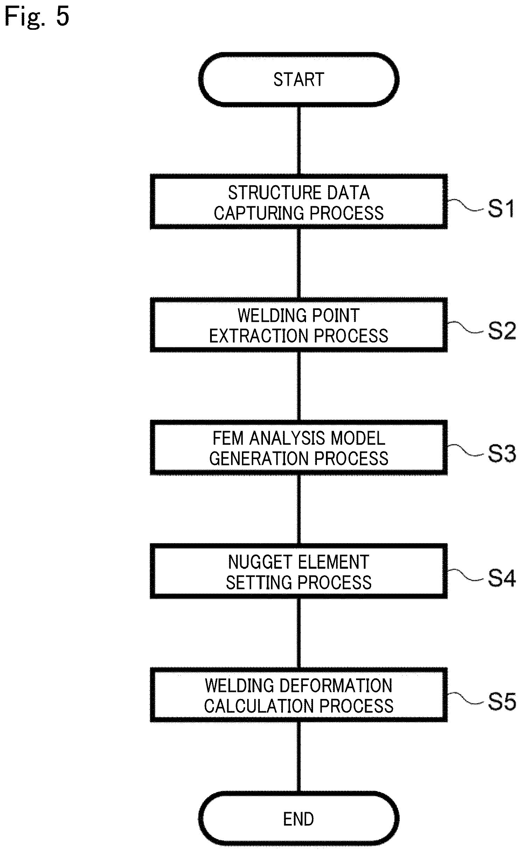

Fig. 5 is a flowchart of the deformation prediction system in Fig. 2.

First, the deformation prediction system executes a structure data capturing process S1. The structure data capturing process S1 is configured so that any figure data of the structure is captured via the input device 12 from the structure shape data file stored in the data storage unit of the storage device 14.

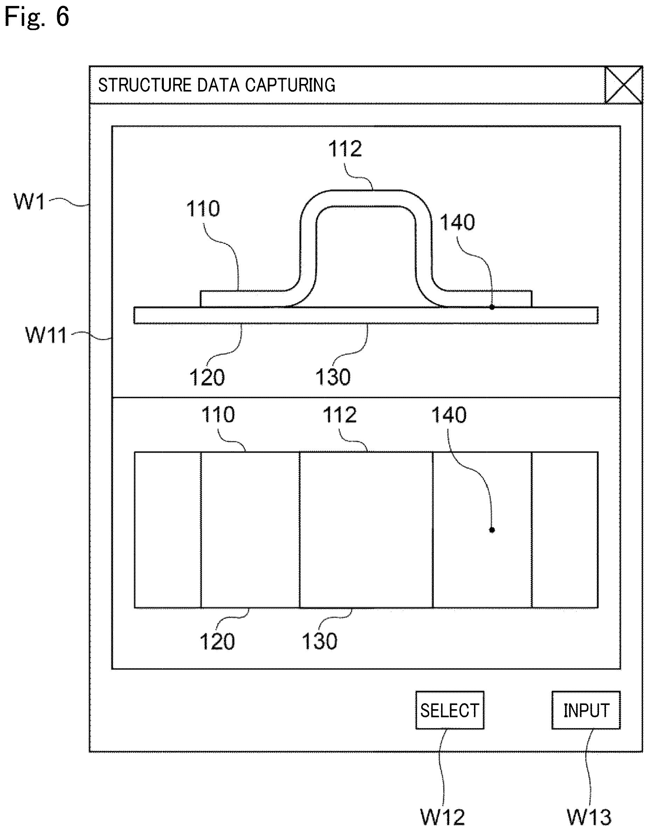

Fig. 6 illustrates an input screen of the structure data capturing process S1 in Fig. 5. This input screen is displayed on the display device 13.

On an input screen W1 illustrated in Fig. 6, a shape capturing screen W11 configured to show figure data of a member to be spot-welded is displayed. A select button W12 is displayed below the shape capturing screen W11. The select button W12 is configured to be able to select any figure data of the structure from the structure shape data file recorded in the storage device 14.

In the present embodiment, the shape capturing screen W11 shows a front view and a plan view of three-dimensional data of the structure 130 selected by pressing the select button W12.

On the input screen W1 in Fig. 6, an input button W13 is displayed to be adjacent to the select button W12. By pressing the input button W13, the three-dimensional data of the structure 130 displayed on the shape capturing screen W11 is input to the structure data capturing process S1. The three-dimensional data of the structure 130 also includes the position of the spot welding point 140.

Further, in the structure data capturing process S1, welding condition information is input via the input device 12. The welding condition information includes materials and plate thicknesses of the first member 110 and the second member 120 of the structure 130, and currents applied to the first spot welding gun 210a and the second spot welding gun 210b, and current-carrying times of these spot welding guns.

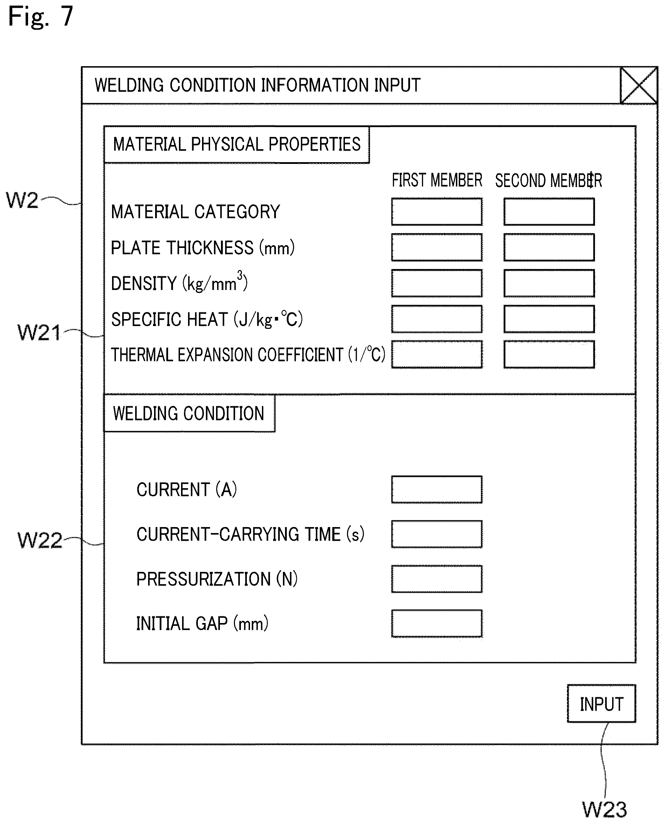

Fig. 7 illustrates another input screen of the structure data capturing process S1 in Fig. 5. This input screen is displayed on the display device 13.

The input screen W2 illustrated in Fig. 7 shows a material physical property input screen W21 and a welding condition input screen W22. The material physical property input screen W21 is configured to receive material properties of members to be spot-welded. The welding conditions of spot welding are input to the welding condition input screen W22.

In the present embodiment, the material physical properties of the first member 110 and the second member 120 of the structure 130, that is, a material category, a plate thickness, density, specific heat, and a thermal expansion coefficient, are input to the material physical property input screen W21. Further, the welding conditions of the spot welding performed on the first member 110 and the second member 120, that is, the currents, current-carrying time, pressurization, and initial gaps for the first spot welding gun 210a and the second spot welding gun 210b, are input to the welding condition input screen W22.

An input button W23 is displayed below the welding condition input screen W22. By pressing the input button W23, the material physical properties input to the material physical property input screen W21 and the welding conditions input to the welding condition input screen W22 are input to the structure data capturing process S1.

Returning to Fig. 5, the deformation prediction system executes a welding point extraction process S2 after executing the structure data capturing process S 1. The welding point extraction process S2 is configured so that the position of the spot welding point 140 is extracted from the three-dimensional data of the structure 130 captured in the structure data capturing process S1.

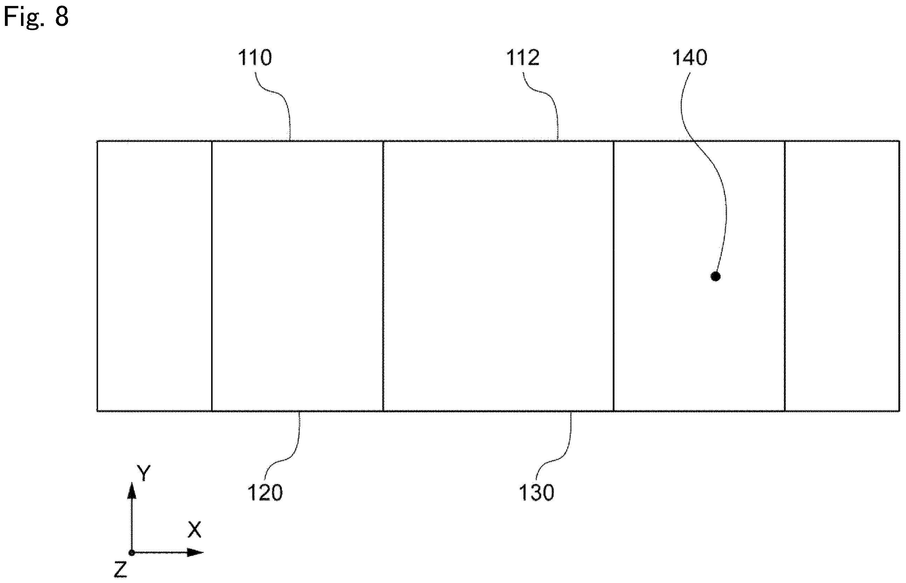

Fig. 8 is a plan view of the structure 130 in Fig. 1.

As illustrated in the drawing, the first member 110 of the structure 130 is disposed to overlap with an upper surface of the second member 120 of the structure 130. The spot welding point 140 is provided on the right side in the X direction with respect to the protrusion 112 of the first member 110. In the welding point extraction process S2, the position of the spot welding point 140 is extracted.

Returning to Fig. 5, the deformation prediction system executes an FEM analysis model generation process S3 after executing the welding point extraction process S2. The FEM analysis model generation process S3 is configured so that an FEM analysis model of the structure 130 is generated based on the three-dimensional data of the structure 130.

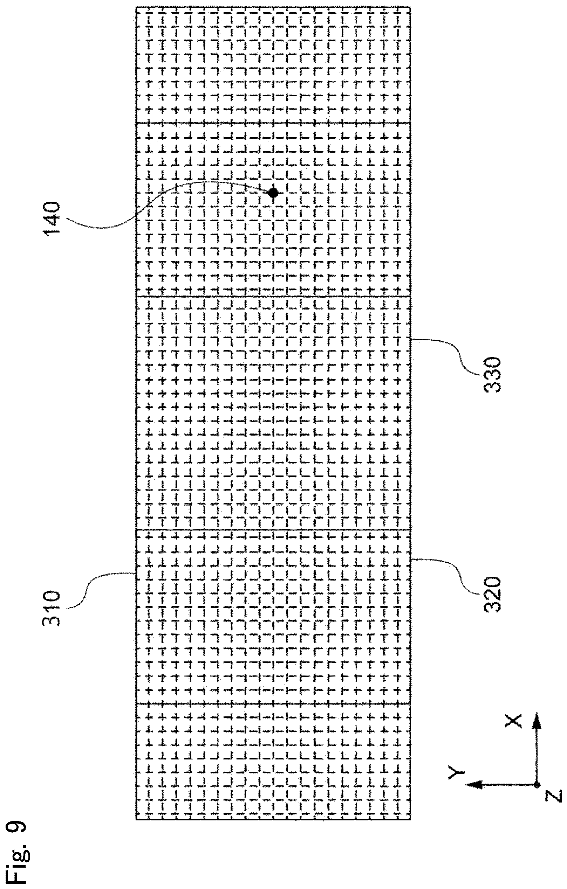

Fig. 9 illustrates an FEM analysis model 330 of the structure 130 in Fig. 1.

In the FEM analysis model 330, the first member 110 and the second member 120 of the structure 130 are divided into finite elements and are created respectively as a first analysis model 310 and a second analysis model 320. The first analysis model 310 and the second analysis model 320 each have a plurality of microscopic elements indicated by quadrangles surrounded by broken lines. In the FEM analysis model generation process S3, the FEM analysis model 330 including the first analysis model 310 and the second analysis model 320 is generated. In addition, the FEM analysis model 330 includes the position of the spot welding point 140, similarly to the three-dimensional data of the structure 130.

Returning to Fig. 5, the deformation prediction system executes a nugget element setting process S4 after executing the FEM analysis model generation process S3. The nugget element setting process S4 is configured so that a nugget element is generated as the FEM analysis model of the spot welding point 140 at the position of the spot welding point 140, and an inherent deformation caused by resistance heating at the spot welding point 140 and pressurization at the spot welding point 140 during spot welding is set in the nugget element based on the inherent deformation data stored in the inherent deformation database 20.

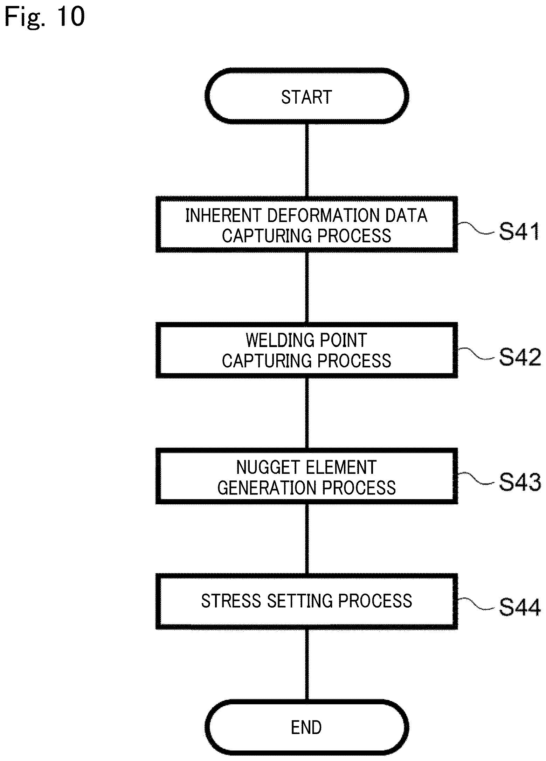

Fig. 10 is a flowchart illustrating the nugget element setting process S4 in Fig. 5.

In the nugget element setting process S4, an inherent deformation data capturing process S41 is executed. The inherent deformation data capturing process S41 is configured so that the inherent deformation data corresponding to the input welding condition information is captured from the inherent deformation database 20 in accordance with the welding condition information input in the structure data capturing process S 1.

Next, a welding point capturing process S42 is executed. The welding point capturing process S42 is configured so that the position of the spot welding point 140 extracted in the welding point extraction process S2 is captured.

Next, a nugget element generation process S43 is executed. In the nugget element generation process S43, in order to reproduce, around the spot welding point 140, the inherent deformation caused by the resistance heating and the pressurization given by the first spot welding gun 210a and second spot welding gun 210b having an approximately cylindrical shape, the shape of the microscopic element around the spot welding point 140 is changed to generate the nugget element having a radial shape around the position of the spot welding point 140.

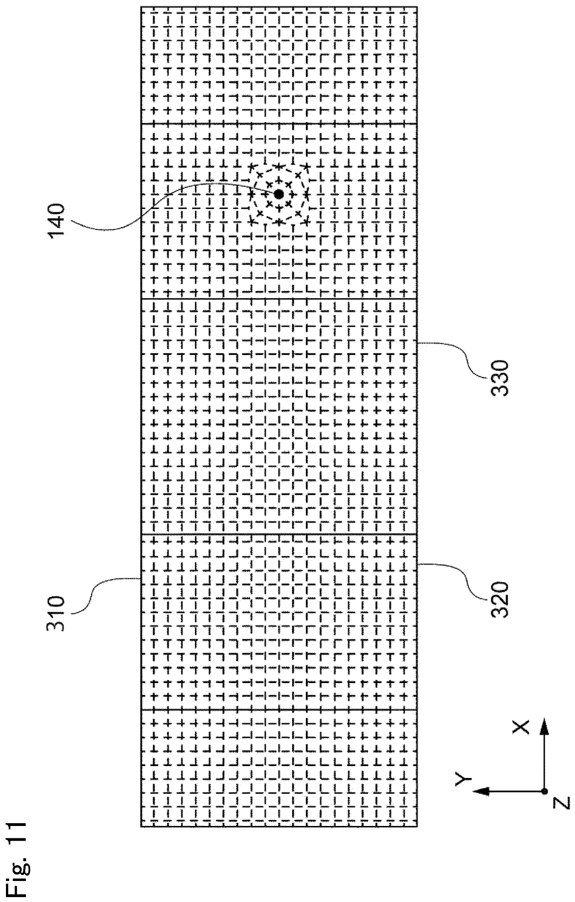

Fig. 11 is a view where the nugget element is added to the FEM analysis model 330 in Fig. 9.

In the present embodiment, around the spot welding point 140, a nugget element 340 having a radial shape, particularly an octagonal shape, around the position of the spot welding point 140 is generated.

Returning to Fig. 10, in the nugget element generation process S43, after the nugget element 340 is generated, an inherent deformation setting process S44 is executed. In the inherent deformation setting process S44, with reference to the in-plane deformation mode, the out-of-plane contraction mode, and the out-of-plane bending mode from the inherent deformation data captured in the inherent deformation data capturing process S41, the in-plane inherent deformation, the out-of-plane contraction inherent deformation, and the out-of-plane bending inherent deformation caused respectively in the in-plane deformation mode, the out-of-plane contraction mode, and the out-of-plane bending mode are set in the nugget element 340.

Returning to Fig. 5, the deformation prediction system executes a welding deformation calculation process S5 after executing the nugget element setting process S4. The welding deformation calculation process S5 is configured so that a welding deformation of the structure 130 is calculated by performing the FEM analysis on the FEM analysis model 330 on which the nugget element 340 is set. In addition, when the welding deformation of the structure 130 is calculated, the welding deformation of the structure 130 as an analysis result is recorded in the welding deformation calculation result file and output to the output device 15.

As described above, the deformation prediction system of the present embodiment includes the nugget element setting process S4 of generating the nugget element 340 as the FEM analysis model of the spot welding point 140 at the position of the spot welding point 140, and setting, in the nugget element 340, an inherent deformation caused by resistance heating at the spot welding point 140 and pressurization at the spot welding point 140 during spot welding based on the inherent deformation data stored in the inherent deformation database.

The FEM analysis is performed based on the nugget element 340 and the FEM analysis model of the structure 130 manufactured by spot-welding the first member 110 and the second member 120. Therefore, it is possible to provide the deformation prediction system capable of calculating a prediction result of the welding deformation at high speed in consideration of the resistance heating and the pressurization in the spot welding.

Further, the inherent deformation data includes the in-plane deformation mode including an in-plane inherent deformation at a time when the structure 130 thermally contracts in the in-plane direction due to cooling of the structure 130 after spot welding, an out-of-plane contraction mode including an out-of-plane contraction inherent deformation at a time when the structure 130 contracts in the out-of-plane direction due to the pressurization at the spot welding point 140 during the spot welding, and an out-of-plane bending mode including an out-of-plane bending inherent deformation at a time when the structure 130 is bent in the out-of-plane direction by the resistance heating at the spot welding point 140 during the spot welding. Therefore, a more accurate prediction result of the welding deformation can be calculated by setting, in the nugget element 340, the in-plane inherent deformation, the out-of-plane contraction inherent deformation, and the out-of-plane bending inherent deformation caused at the spot welding point 140 due to the resistance heating and pressurization in the spot welding.

Further, the nugget element 340 is formed in an octagonal shape around the position of the spot welding point 140. Since the first spot welding gun 210a and the second spot welding gun 210b each generally have an approximately cylindrical shape, an actual welding influence region at the spot welding point 140 is approximately circular. Therefore, a more accurate prediction result of the welding deformation can be calculated at high speed by generating the nugget element 340 in an octagonal shape close to an approximately circular shape.

In the present embodiment, for the sake of explanation, only one spot welding point 140 is set, but a plurality of spot welding points may be provided.

In the present embodiment, the inherent deformation data includes the in-plane deformation mode, the out-of-plane contraction mode, and the out-of-plane bending mode, but may include another mode or only a part of the above modes.

In the present embodiment, the in-plane deformation mode includes the in-plane contraction mode in which the structure 130 is thermally contracted in the in-plane direction by cooling the structure 130 after spot welding is performed, but may include, for example, an in-plane expansion mode in which the structure 130 is thermally expanded in the in-plane direction during the spot welding.

In the present embodiment, the nugget element 340 is formed in an octagonal shape, but may be formed in a hexagonal shape or a decagonal shape, for example.

In the present embodiment, a record including a set of the welding type, material physical properties, and welding conditions as the welding condition information and the inherent deformation data obtained based on the condition information is registered in advance in the inherent deformation database 20. However, the central processing unit 11 may calculate inherent deformation data using the information input via the input device 12 and the program and data recorded in the storage device 14, and may store the calculated inherent deformation data in the inherent deformation database 20. With this configuration, as for each spot welding point of a structure manufactured by performing spot welding, inherent deformation data can be generated for material physical properties and welding conditions of a member to be newly input, and can be registered in the inherent deformation database 20.

### EXPLANATION OF REFERENCES

- 20: inherent deformation database
- 110: first member
- 120: second member
- 130: structure
- 140: spot welding point
- 330: FEM analysis model of structure
- 340: nugget element
- S1: structure data capturing process
- S2: welding point extraction process
- S3: FEM analysis model generation process
- S4: nugget element setting process
- S5: welding deformation calculation process

## Claims

1. A deformation prediction system that calculates, with FEM analysis, a welding deformation of a structure manufactured by performing spot welding on a plurality of members, the deformation prediction system comprising:
a structure data capturing process of capturing shape data of the structure;
a welding point extraction process of extracting a position of the spot welding point from the shape data of the structure;
an FEM analysis model generation process of generating an FEM analysis model of the structure based on the shape data of the structure;
a nugget element setting process of generating a nugget element as an FEM analysis model of the spot welding point at the position of the spot welding point, and setting, in the nugget element, an inherent deformation caused by resistance heating at the spot welding point and pressurization at the spot welding point during the spot welding; and
a welding deformation calculation process of calculating the welding deformation of the structure with the FEM analysis based on the FEM analysis model of the structure and the nugget element.

2. The deformation prediction system according to claim 1, wherein the inherent deformation includes
an in-plane deformation mode including an in-plane inherent deformation at a time when the structure is deformed in an in-plane direction,
an out-of-plane contraction mode including an out-of-plane contraction inherent deformation at a time when the structure contracts in an out-of-plane direction due to the pressurization at the spot welding point during the spot welding, and
an out-of-plane bending mode including an out-of-plane bending inherent deformation at a time when the structure is bent in the out-of-plane direction by the resistance heating at the spot welding point during the spot welding.

3. The deformation prediction system according to claim 1 or 2, wherein the nugget element is formed in a radial shape around the position of the spot welding point.

4. The deformation prediction system according to claim 3, wherein the nugget element is formed in an octagonal shape around the position of the spot welding point.

5. The deformation prediction system according to any one of claims 1 to 4, further comprising an inherent deformation data preparation process of storing inherent deformation data corresponding to the spot welding point of the structure in an inherent deformation database,
wherein in the nugget element setting process, the inherent deformation caused by the resistance heating and the pressurization is set in the nugget element based on the inherent deformation data stored in the inherent deformation database.

6. A deformation prediction program that calculates, with FEM analysis, a welding deformation of a structure manufactured by performing spot welding on a plurality of members, the deformation prediction program comprising:
a structure data capturing process of capturing shape data of the structure;
a welding point extraction process of extracting a position of the spot welding point from the shape data of the structure;
an FEM analysis model generation process of generating an FEM analysis model of the structure based on the shape data of the structure;
a nugget element setting process of generating a nugget element as an FEM analysis model of the spot welding point at the position of the spot welding point, and setting, in the nugget element, an inherent deformation caused by resistance heating at the spot welding point and pressurization at the spot welding point during the spot welding; and
a welding deformation calculation process of calculating the welding deformation of the structure with the FEM analysis based on the FEM analysis model of the structure and the nugget element.
